# NEUE EUROPÄISCHE PATENTSCHRIFT

(11) **EP 2 997 550 B2**
(45) Veröffentlichungstag und Bekanntmachung des Hinweises auf die Entscheidung über den Einspruch: **26.06.2019**
(45) Hinweis auf die Patenterteilung: 08.06.2016
(21) Anmeldenummer: 15700657.8
(22) Anmeldetag: 13.01.2015
(51) Int. Cl.: G07C 9/00, B60R 25/24

(54) **VERFAHREN ZUR ZUGRIFFSKONTROLLE**
METHOD FOR CONTROLLING ACCESS
PROCÉDÉ DE CONTRÔLE D'ACCÈS

(30) Priorität: 22.05.2014 DE 102014107242
(43) Veröffentlichungstag der Anmeldung: 23.03.2016
(73) Patentinhaber: Huf Hülsbeck & Fürst GmbH & Co. KG, 42551 Velbert (DE)
(72) Erfinder: GENNERMANN, Sven, 42551 Velbert (DE); BAMBECK, Daniel, 45149 Essen (DE); Käufer Uwe, 47055 Duisburg (DE)
(74) Vertreter: Zenz Patentanwälte Partnerschaft mbB
(86) Internationale Anmeldenummer: PCT/EP2015/050471
(87) Internationale Veröffentlichungsnummer: WO 2015/176826

(56) Entgegenhaltungen:
- EP-A1- 2 493 232
- EP-A1- 2 575 091
- EP-B1- 1 965 595
- WO-A2-2007/009453
- DE-A1- 10 156 737
- DE-A1- 10 237 831
- DE-A1-102010 037 271
- DE-A1-102011 078 018
- DE-A1-102011 118 234
- DE-A1-102012 012 389
- DE-A1-102012 013 450
- US-A- 6 072 402
- US-A1- 2012 164 989
- US-A1- 2013 259 232

## Beschreibung

Die Erfindung betrifft ein Verfahren für die Kontrolle von Zugriffen durch Individuen auf physische Einheiten. Insbesondere betrifft die Erfindung ein System und ein Verfahren, bei dem individuelle Zugriffsprivilegien an Individuen verteilt und verwaltet werden können.

Die Verwaltung von Zugriffsrechten oder Benutzungsrechten ist im Bereich der Technik vielerorts zu finden. Beispielsweise gibt es komplexe Rechtehierarchien und -schemata bei der Verwaltung von Zugriffsprivilegien in Computersystemen. Dort wird einem Individuum, welches sich selber dem Computersystem gegenüber durch beispielsweise eine geheime Kennung oder biometrische Daten identifiziert, der Zugriff auf Dienste oder Dateien des Rechnersystems gewährt. Reichen die zugewiesenen Rechte oder Privilegien jedoch nicht aus, um eine angeforderte Aktion durchführen, wird diese durch technische Maßnahmen unterbunden.

Weiterhin sind Schließsysteme bekannt, bei denen zur Zugriffskontrolle ein Schließmittel identifiziert wird, um den Zugriff auf eine Funktion, beispielsweise einen Zugang zu einem Bereich zu prüfen. Bei derartigen Systemen wird oft davon ausgegangen, dass der Träger des Schließmittels auch der Berechtigte für die Anforderung der jeweiligen Funktion ist. Entsprechende Konzepte finden sich auch im Bereich der Fahrzeugschließsysteme, insbesondere bei Keyless-Entry- und Keyless-Go-Systemen. Dort führt ein Benutzer einen als ID-Geber bezeichneten Fahrzeugschlüssel mit sich. Dieser ID-Geber enthält codierte Informationen, die einem Fahrzeug gegenüber die Berechtigung des ID-Gebers (nicht unbedingt des Trägers des ID-Gebers) zur Ausübung von Funktionen legitimieren. Wird also der ID-Geber an einen weiteren Benutzer gegeben, so ist dieser ebenfalls in der Lage, mit dem ID-Geber die Fahrzeugfunktionen aufzurufen und zu betätigen.

Im Bereich der Zugangssysteme für Fahrzeuge sind zahlreiche unterschiedliche Verwaltungssysteme bekannt, um Zugriff auf Fahrzeuge zu erlauben. Beispielsweise beschreibt die US 2013/0259232 A1 ein System zur Kopplung oder Paarung (pairing) eines Mobiltelefons mit einem Fahrzeug, um mit dem Mobiltelefon Fahrzeugfunktionen ansteuern zu können.

Die DE 10 2011 078 018 A1 beschreibt ein anderes System zum Ausführen von Fahrzeugfunktionen, wobei eine Telematik-Zentrale einen Teil der Kommunikation mit dem Fahrzeug ausführt.

Die US2012/0164989 betrifft ein anderes Verfahren und System für eine drahtlose Schließfunktion eines Fahrzeuges.

Die EP 1 910 134 B1 (WO2007/009453 A2) beschreibt ein System mit einer zentralen Verwaltung, die Datenpakete als Schlüssel an mobile Zugriffseinrichtungen verteilt.

Das Dokument DE 10 2011 118 234 A1 offenbart ein Verfahren und System zur Freigabe einer technischen Vorrichtung. Mittels des Verfahrens können registrierte, authentifizierte Nutzer unter Verwendung des Mobilgerätes eine sichere Reservierung für eine technische Vorrichtung vornehmen.

Die bekannten Systeme und Verfahren, welche einen Zugriff auf technische Einrichtungen ermöglichen, haben jedoch Nachteile. Bei einigen der Systeme ist es möglich, mit technischen Einrichtungen wie mobilen Computern, Smartphones oder Ähnlichem, eine Berechtigung zum Zugriff auf technische Einrichtungen oder zum Ausführen von Funktionen in einer solchen Art und Weise zu generieren oder abzurufen, dass Angreifer unberechtigten Zugang zu Einrichtungen (z.B. Fahrzeugen) oder deren Funktionen erhalten können.

Aufgabe der Erfindung ist es, ein sicheres und flexibles Verfahren zur Verfügung zu stellen, um eine erweiterte Privilegien-Verwaltung für den Zugriff auf physische Einheiten zu ermöglichen.

Gemäß der Erfindung wird ein Verfahren nach den Ansprüchen 1-11 vorgeschlagen.

Gemäß der Erfindung wird also bezüglich der Ausbildung von Kommunikationsbeziehungen und Datentransporten eine Vierecksbeziehung aufgebaut, bei der einerseits die Kontrollplattform sowohl mit der mobilen Zugangseinrichtung als auch der Zugriffs-Steuereinheit der kontrollierten physischen Einheit in Kommunikationsverbindung treten kann. Der Benutzer interagiert seinerseits mit der mobilen Zugangseinrichtung. Er interagiert ggf. auch mit der Zentralen Plattform über die Nutzung separater Kommunikationswege (z.B. Rechner mit Internetverbindung). Die Identität des Benutzers ist eine Schlüsselkomponente, welche das Zusammenwirken der anderen Komponenten möglich macht, wobei die Identität in verschiedenen Schritten geprüft wird. Diese Kommunikationen der verschiedenen Komponenten laufen nicht unbedingt gleichzeitig ab, es ist jedoch wesentlich, dass die grundsätzlichen Kommunikationsmöglichkeiten dieser drei Komponenten wechselseitig miteinander gegeben sind. Dieses Konzept sichert eine Verifikation von erhaltenen Informationen aus einer der Übertragungen mit einer unabhängigen Stelle. Wie unten beschrieben, sichert diese wechselweise Beziehung in Kombination mit den Besonderheiten der mobilen Zugangseinrichtung den Zugriff in besonders sicherer und zuverlässiger Weise.

Ein Benutzer des erfindungsgemäßen Verfahrens hat Zugriff auf die mobile Zugangseinrichtung, also beispielsweise auf ein Smartphone mit darauf installierter Applikation. Auch wenn er dieses Gerät zur Kommunikation mit der fahrzeugseitigen Zugriffs-Steuereinheit bringen könnte, würde die fahrzeugseitige Zugriffs-Steuereinheit einen Zugriff auf das Fahrzeug nicht ohne weiteres zulassen, da es an der erforderlichen Legitimation fehlt. Das Fahrzeug akzeptiert nämlich nicht allein die Identität der mobilen Zugriffseinrichtung als Legitimation sondern nur in Kombination mit der verifizierten Identität des Benutzers. Dieser Identitätsnachweis gelingt nur, indem die mobile Zugriffseinrichtung Informationen von der zentralen Plattform erhält, welche die mobile Zugriffseinrichtung und die damit identifizierte Person als legitimen Bediener der physischen Einheit kennzeichnen.

Die Erfindung gliedert die Verwaltung von Privilegien und den kontrollierten physischen Einheiten in die zentrale Steuerplattform aus. Damit ist diese Verwaltung der Manipulation durch Unberechtigte entzogen, da nur vertrauenswürdige Stellen Änderungen an der zentralen Steuerplattform durchführen dürfen. Es genügt nicht, die Daten eines mobilen Geräts zu manipulieren, da die Zugriffs-Steuereinrichtung über die Verbindung zur zentralen Plattform die Berechtigungsdaten verifiziert.

Die zentrale Steuerplattform kann Informationen über menschliche Individuen enthalten, die dieser Steuerplattform gegenüber in verlässlicher Weise identifiziert werden. Die zentrale Steuerplattform kann jedoch auch zu anonymisierten Kennungen zugeordnete Rechte zu zugeordneten Zugriffs-Steuereinheiten verwalten, so dass in der zentralen Steuerplattform keine Verknüpfungen mit realen Personen vorliegen, sondern nur anonymisierte Kennungen.

Während bei herkömmlichen Zugangssystemen oder Zugriffsverwaltungen die Identifikation mittels eines entsprechenden Utensils, eines Tags, Schlüssels, einer Schlüsselkarte oder Ähnlichem erfolgt, werden erfindungsgemäß die Privilegien zu Personen oder eindeutigen Kennungen zugeteilt und verwaltet. Unabhängig davon, welcher Mittel sich die Person bedient, um sich der zentralen Steuerplattform oder der Zugriffseinrichtung gegenüber zu legitimieren, wird nicht eine Privilegien-Erteilung an ein solches Mittel (Telefon, Schlüssel etc.) gebunden sondern an die erkannte Person bzw. erkannte Identität.

Wesentlich für die Erfindung ist, dass zu der Identität einer Person oder zu einer anonymisierten Kennung in der zentralen Steuerplattform zugeordnete Rechte gespeichert werden. Diese Rechte beziehen sich jeweils auf Teilmengen der Zugriffs-Steuereinheiten, die von der zentralen Plattform verwaltet werden. Zu einer Kennung können also beispielsweise Rechte vergeben werden, die für Gruppen oder auch alle zugeordneten Zugriffs-Steuereinheiten gelten. Andere Rechte können für einzelne Zugriffs-Steuereinheiten zugeordnet werden. Im Beispiel einer Fuhrparkkontrolle bedeutet dies, dass einem Mitglied des Verwaltungspersonals z.B. für alle Fahrzeuge des Fuhrparks das Recht zur Öffnung des Fahrzeugs zugewiesen wird, nur für einige Fahrzeuge jedoch das Recht, das Fahrzeug zu starten.

Es ist entsprechend erforderlich, zunächst in der zentralen Steuerplattform einen Eintrag bezüglich der Identität oder anonymisierten Kennung eines zulässigen Benutzers einzubringen. Diese Einträge können in hergebrachter Weise mit Hilfe einer Datenbank, die eine Schnittstelle zur Abfrage bereitstellt, verwaltet werden. Über eine Schnittstelle zu anderen Systemen, z.B. Systemen von Mietwagenanbietern, Sicherheitsunternehmen oder Car-Sharing Anbietern kann auch die Übernahme von Kennungen erfolgen. Während die gekoppelten Systeme der weiteren Anbieter die Identität ihrer Kunden kennen, übermitteln sie der zentralen Plattform z.B. nur eine anonymisierte Kennung und die zugehörigen Rechte. Die persönlichen Daten verbleiben dann beim Vertragspartner, die zentrale Plattform verwaltet jedoch die Rechte anhand der Kennung.

Die mobile Zugriffseinrichtung kann in eine Datenkommunikation mit der zentralen Steuerplattform treten. Von der zentralen Steuerplattform werden der mobilen Zugriffseinrichtung Informationen zur Verfügung gestellt, die eine Legitimation gegenüber der Zugriffs-Steuereinheit einer physischen Einheit ermöglichen. Dies kann z.B. ein Zertifikat sein, welches von der zentralen Steuerplattform ausgestellt wird.

Die mobile Zugriffseinrichtung dient außerdem dazu, gegenüber einer Zugriffs-Steuereinheit die Identität des Trägers zu versichern. Die mobile Zugriffseinrichtung ist dafür derart ausgestattet, dass eine verlässliche Identifikation des Benutzers möglich ist. Diese Identifikation eines Benutzers kann beispielsweise über eine nur ihm bekannte Kennung erfolgen oder über die Abfrage von biometrischen Daten, wie beispielsweis eine Gesichtserkennung, einer Stimmanalyse oder eines Fingerabdrucks. Nur wenn diese Identifikation gegenüber der mobilen Zugriffseinrichtung erfolgreich ist, kann auf die Informationen in der mobilen Zugriffseinrichtung zugegriffen werden. Die Art der erforderlichen Identifikation kann von der Sicherheitsrelevanz des angeforderten Rechts abhängen. Begehrt ein Benutzer z.B. die Abfrage von Fahrzeugdaten (km-Stand, Tankfüllung etc.) in unmittelbarer Nähe des Fahrzeuges, kann eine Eingabe einer PIN am Mobilgerät oder eine besondere Wischgeste auf einem Bedienfeld des Gerätes ausreichen. Für den Start des Fahrzeuges ist z.B. eine Gesichtserfassung erforderlich. Welche Art der Identitätsprüfung für welches Privileg erforderlich ist, kann in der zentralen Plattform hinterlegt sein.

Ist die Identifikation gegenüber der mobilen Zugriffseinrichtung erfolgreich, wird eine Verbindung mit der zu kontrollierenden physischen Einheit, genauer mit der Zugriffs-Steuereinheit des physischen Einheit aufgebaut und die Zugangsinformationen, die wenigstens teilweise von der zentralen Steuerplattform an die mobile Zugriffseinrichtung übermittelt wurden, werden genutzt, um auf die Funktionen der physischen Einheit zuzugreifen.

Dabei kommt die erfindungsgemäße Verbindung der Zugriffs-Steuereinheit auf Seiten der physischen Einheit mit der zentralen Steuerplattform zur Wirkung. Durch diese Verbindung ist es möglich, dass die Zugriffs-Steuereinheit auf Seiten der physischen Einheit verifiziert, ob die von der mobilen Zugriffseinrichtung übermittelten Zugriffsinformationen tatsächlich legitime Zugriffsdaten für die angeforderten Funktionen sind. Herkömmliche Systeme verfügen nicht über eine solche Verbindung und müssen sich entsprechend auf die Prüfung der Daten allein von der mobilen Zugriffseinrichtung verlassen.

Die zentrale Steuerplattform kennt sowohl die an dem Legitimationsverfahren beteiligten Einheiten, als auch die zugeordneten Privilegien einer mittels dieser Einheiten identifizierten Person. Der zentralen Steuerplattform ist einerseits die Identität oder Kennung eines Benutzers bekannt, andererseits die Identität der mobilen Zugriffseinrichtung und die Identität der Zugriffs-Steuereinheit in der physischen Einheit. Sämtliche dieser Einrichtungen werden anhand eindeutiger Merkmale identifiziert. Nur die zentrale Steuerplattform verfügt über sämtliche Kenntnisse, um einen Zugriff mit zentraler Verwaltung zu ermöglichen.

In einer einfachen Gestaltung der Erfindung wird auf der zentralen Plattform eine Kennung eingerichtet, die einen Benutzer kennzeichnet. Zu der Kennung werden Daten einer mobilen Zugriffseinrichtung hinterlegt und verknüpft. Beispielsweise kann dies eine IMEI zu einem Mobilgerät umfassen. Es wird außerdem ein Satz von Zugriffsrechten zu der Kennung in der zentralen Plattform gespeichert. Diese Erstidentifikation erfolgt z.B. unter Zwischenschaltung einer vertrauenswürdigen Stelle, z.B. einer Behörde oder eines vertrauenswürdigen Dienstleisters.

Vor Erstbenutzung wird von der zentralen Plattform eine Nachricht an das registrierte Mobilgerät, welches als mobile Zugriffseinrichtung dienen soll, gesandt. Der Nutzer des Gerätes wird aufgefordert, sich einer Erstregistrierung zu unterziehen. Der Benutzer gibt dann an dem Mobilgerät eine Reihe von Informationen an, die später zur Identitätsprüfung herangezogen werden. Es wird z.B. eine PIN gespeichert, eine Wischgeste und es werden biometrische Vergleichsdaten erfasst (Gesichtsscan, Stimmprobe, Fingerabdruck etc.). Ist dies erfolgt, können bereits Daten von der zentralen Plattform abgerufen und auf der mobilen Zugriffseinrichtung gespeichert werden. Diese Daten können z.B. Identifikationsdaten enthalten sowie Daten, welche die Authentizität der Daten belegen. Beispielsweise können die Daten mit einem Zertifikat der zentralen Plattform signiert oder auch verschlüsselt sein. Anschließend ist das System einsatzbereit.

Möchte ein Benutzer nun auf eine physische Einrichtung, z.B. ein Fahrzeug zugreifen, so hat er sich in der Nähe der physischen Einheit mit der zugeordneten Zugriffs-Steuereinheit zu befinden. Zunächst muss er sich dann gegenüber der mobilen Zugriffseinrichtung identifizieren. Nur wenn dies gelingt, greift die mobile Zugriffseinrichtung überhaupt auf die in der mobilen Zugriffseinrichtung gespeicherten Daten zu und übermittelt die Daten zu einem geforderten Recht an die Zugriffs-Steuereinheit, welche die Rechte an einer physischen Einheit verwaltet. Diese Übermittlung erfolgt über eine drahtlose Verbindung, z.B. per Bluetooth oder WLAN oder NFC. Auf Seiten der Zugriffs-Steuereinheit wird geprüft, ob die Daten authentisch sind. Dies wird unten näher erläutert. Die Zugriffs-Steuereinheit greift dabei auf Daten zu, welche sie unmittelbar über die Kommunikationsverbindung von der zentralen Plattform erhalten hat (unmittelbar im Zuge der aktuellen Rechteprüfung oder zeitversetzt, bereits zu einem früheren Zeitpunkt).

Durch die vorstehend erläuterte wechselseitige Kommunikation der Komponenten können äußerst sichere Zugriffsbeschränkungen etabliert werden. Herkömmliche Systeme waren darauf angewiesen, die Prüfung der Authentizität anhand von dauerhaft in der Zugriffs-Steuereinheit gespeicherten Daten vorzunehmen. Dort wurden z.B. Zertifikate von vertrauenswürdigen Stellen dauerhaft hinterlegt. Die erfindungsgemäße Möglichkeit zur Aktualisierung der Daten, bis hin zu einer Live-Überprüfung, sichert die Zugriffe ab, da dieser Kommunikationsweg unabhängig von dem Weg zwischen mobiler Zugriffseinrichtung und zentraler Plattform ist und auch unabhängig von Daten auf der mobilen Zugriffseinrichtung, die evtl. manipuliert wurden.

Vorzugsweise wird der mobilen Zugriffseinrichtung ein Schlüssel oder Zertifikat für den Zugriff auf eine bestimmte zugeordnete Zugriffs-Steuereinheit einer physischen Einheit übermittelt. Der zugeordneten Zugriffs-Steuereinheit der physischen Einheit wird von der zentralen Plattform z.B. ein Teil eines asymmetrischen Schlüssels übermittelt, um das Zertifikat zu verifizieren. Dabei können herkömmliche asymmetrische Verschlüsselungsverfahren, beispielsweise gemäß dem Konzept des öffentlichen und des privaten Schlüssels genutzt werden.

Der Vorteil dieser Art von Zugriffskontrolle liegt darin, dass zwar insbesondere für die Einrichtung und Etablierung der Zugriffsrechte eine Verbindung sämtlicher Kommunikationsteilnehmer mit der zentralen Steuerplattform vorliegen müssen, zu späteren Zeiten jedoch auch vorübergehend eine Zugriffskontrolle und Zugriffsfunktion ohne die Mitwirkung der zentralen Steuerplattform möglich ist. Beispielsweise kann die zentrale Steuerplattform der mobilen Zugriffseinrichtung und der Zugriffs-Steuereinheit in der physischen Einheit Informationen übermitteln, die mit einem Zertifikat der zentralen Steuerplattform versehen sind. Sowohl in der mobilen Zugriffseinrichtung als auch in der physischen Einheit und der Zugriffs-Steuereinheit kann vorgesehen sein, dass einer gewissen Zertifikatsklasse, beispielsweise solchen von der zentralen Steuerplattform ausgestellten Zertifikaten jedenfalls zeitweise vertraut wird, auch wenn vorübergehend kein unmittelbarer Zugriff auf die zentrale Steuerplattform möglich ist. Dazu können die Zertifikate mit Verfallsdaten versehen sein, nach deren Verstreichen die Zertifikate für die gegenseitige Legitimation nicht länger akzeptiert werden.

Zu einer Nutzer-Identität oder Kennung können damit zahlreiche verschiedene Schemata hinsichtlich Privilegien zum Zugriff auf verschiedene physische Einheiten vorliegen. Zu ein und derselben Identität können beispielsweise im Falle einer Anwendung der Erfindung auf eine Kontrolle des Zugriffs auf Fahrzeuge unterschiedliche Privilegien für unterschiedliche Fahrzeuge vergeben werden, wobei jedoch die gleiche personelle Identität des Benutzers das verbindende Element ist. In der Steuerplattform kann auch im Sinne einer Privilegien-Verwaltung eine übergreifende Rechtevergabe oder Rechterestriktion stattfinden, beispielsweise eine Restriktion hinsichtlich der Nutzungsart oder des Nutzungsumfangs zu einem bestimmten Fahrzeug (beispielsweise der erlaubten Höchstgeschwindigkeit unabhängig vom verwendeten Fahrzeug).

Die Erfindung wird nun anhand von Ausführungsbeispielen näher erläutert, welche in den beiliegenden Figuren gezeigt sind.
Figur 1 zeigt ein Schema eines Kommunikationsablaufes gemäß einem ersten Ausführungsbeispiel der Erfindung.
Figur 2 zeigt ein Schema einer Einrichtung und Verwaltung der zentralen Plattform gemäß einem zweiten Ausführungsbeispiel der Erfindung.
Figur 3a zeigt ein erstes Schema eines Zugriffs auf ein Fahrzeug gemäß dem zweiten Ausführungsbeispiel der Erfindung.
Figur 3b zeigt ein zweites Schema eines Zugriffs auf ein Fahrzeug gemäß dem zweiten Ausführungsbeispiel der Erfindung.

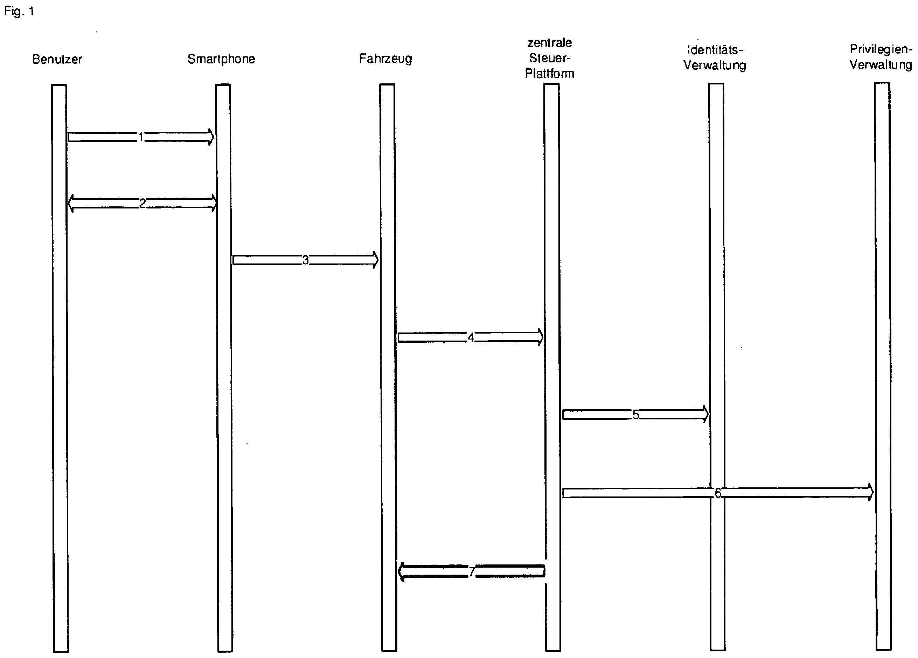

In Figur 1 sind die verschiedenen Stationen und getrennten Funktionseinheiten symbolisch dargestellt. Der zeitliche Ablauf des Nachrichtenflusses und Informationsaustausches ist durch Pfeile zwischen diesen Einheiten dargestellt. Die kontrollierten physischen Einheiten sind in diesem Beispiel Fahrzeuge, bei denen eine Zugriffs-Steuereinheit mit dem zentralen Steuersystem des Fahrzeugs gekoppelt ist, welche die Rechte für die Fahrzeugfunktionen kontrolliert und Funktionen freigeben oder sperren kann.

Bevor das Verfahren in der gezeigten Weise ablaufen kann, ist ein Anlernvorgang durchzuführen. Dies bedeutet, der zentralen Steuerplattform sind Informationen zu den Nutzer-Identitäten und den Privilegien sowie den kontrollierten Fahrzeugen zur Verfügung zu stellen. Dies kann beispielsweise geschehen, indem sich eine Person gegenüber einer vertrauenswürdigen Stelle mit geeigneten Identifikationsmitteln (z.B. Pass oder Personalausweis) ausweist. Diese vertrauenswürdige Stelle kann der Fahrzeughändler sein, der eine persönliche Prüfung der Identität vornimmt und einen entsprechenden Identitätseintrag mit einer Berechtigung zum Zugriff auf ein bestimmtes Fahrzeug verknüpft.

Diese Daten werden vom Fahrzeughändler beim Fahrzeugkauf oder der Wartung in eine Datenbank eingepflegt, die der zentralen Steuerplattform zugänglich ist. Wesentlich ist, dass die Identitäten und die den Identitäten zugeordneten Privilegien in der zentralen Steuerplattform verwaltet werden und Änderungen nur über die zentrale Steuerplattform vorgenommen werden können. Die Benutzung des zentralen Systems kann in herkömmlicher Weise geschehen, z. B. durch eine Verwaltung einer Datenbank durch eine Eingabemaske, die in einem Internetbrowser dargestellt wird. Die eigentliche Verwaltung hinter dem Frontend kann eine beliebige Art von Datenbank mit geeigneter Absicherung sein.

Erfindungsgemäß findet die Privilegien-Verwaltung also an einer zentralen Stelle, nämlich der zentralen Steuerplattform statt. Außerdem sind der zentralen Steuerplattform die zugriffkontrollierten physischen Einheiten, in diesem Fall die Fahrzeuge, bekannt zu machen. Dafür wird eine eindeutige Identifikation des Fahrzeugs in der zentralen Steuerplattform gespeichert. Bei einer Flottenverwaltung oder einem Carsharing-Konzept können sämtliche Fahrzeuge als physische Einheiten in der zentralen Steuerplattform gespeichert sein. Den Fahrzeugen sind jeweils eindeutig Zugriffs-Steuereinheiten zugeordnet, die in Verbindung mit der zentralen Steuerplattform treten können.

Schließlich ist es noch wesentlich, dass der zentralen Steuerplattform gegenüber auch jedes mobile Zugriffsgerät bekannt gemacht wird. Das mobile Zugriffsgerät kann dabei in der zentralen Steuerplattform einem Nutzer oder einer Kennung zugeordnet werden, also mit dieser verknüpft werden. Dies läuft beispielsweise so ab, dass eine identifizierte Person gegenüber einer vertrauenswürdigen Stelle das mobile Zugriffsgerät, in diesem Fall ein Smartphone, registriert. Beispielsweise wird die Rufnummer des Smartphones angegeben. An diese Rufnummer kann dann eine Nachricht von der vertrauenswürdigen Stelle gesandt werden, wobei der Inhalt der Nachricht dann wiederum von der identifizierten Person der vertrauenswürdigen Stelle anzugeben ist. Dadurch wird ein Ring geschlossen und es wird verifiziert, dass tatsächlich die angegebene Identifizierung des mobilen Zugriffsgerätes zu der identifizierten Person gehört.

Im Weiteren wird nun das erfindungsgemäße Verfahren in seiner Anwendung beschrieben, wobei auf Figur 1 Bezug genommen wird.

Zu Beginn des Verfahrens verlangt ein Benutzer durch eine Benutzeraktivität auf dem Smartphone Zugriff zu einen Fahrzeug zu erhalten, in dessen Nähe er sich mit dem mobilen Gerät (z.B. Smartphone oder Tablet) befindet. Die Benutzereingabe, beispielsweise ein Anwendungsaufruf am mobilen Gerät, ist mit dem Kommunikationspfeil 1 bezeichnet. Die mobile Zugriffseinrichtung verifiziert nun die Identität des Benutzers, indem in diesem Beispiel eine Gesichtserkennung durchgeführt wird (Pfeil 2). Der Benutzer hat sein Gesicht der im Smartphone integrierten Kamera darzubieten und eine im Gerät befindliche Software gleicht das Gesicht mit gespeicherten und authentifizierten biometrischen Daten ab.

Scheitert diese Authentifizierung gegenüber dem mobilen Gerät, bricht das Verfahren an dieser Stelle ab und ein Zugriffsversuch auf das Fahrzeug scheitert.

Die Verifikation der Identität kann anhand von im mobilen Gerät verschlüsselt gespeicherten Daten erfolgen, also können die biometrischen Daten im mobilen Gerät in verschlüsselter Weise gespeichert vorliegen.

Ist die Identität gegenüber dem mobilen Gerät erfolgreich mit dem Kommunikationsaustausch 2 verifiziert, so nimmt die mobile Zugriffseinrichtung Kontakt mit dem Fahrzeug auf, was über eine Standard-NFC-Schnittstelle oder eine Bluetooth-Verbindung geschehen kann. Die mobile Zugriffseinheit baut eine Verbindung mit der Zugriffs-Steuereinheit des Fahrzeuges beim Kommunikationspfeil 3 auf. Die mobile Zugriffseinheit fordert in dieser Nachricht z.B. die Betätigung einer Fahrzeug-Funktion, z.B. eine Türöffnung, an.

Der Zugriffs-Steuereinheit des Fahrzeugs wird dann von dem mobilen Gerät die verifizierte Identität des Benutzers mitgeteilt. Gemäß diesem Beispiel geschieht dies mit Hilfe von Zertifikaten, die von der zentralen Steuerplattform ausgestellt sind und in dem Smartphone abgespeichert sind. Insbesondere können dafür herkömmliche Zertifizierungsverfahren mit öffentlichen und privaten Schlüsseln verwendet werden. In dem mobilen Gerät liegt also beispielsweise eine Identitätsinformation vor, die mit dem privaten Schlüssel der zentralen Steuerplattform signiert ist. In der Zugriffs-Steuereinheit im Fahrzeug liegen, ähnlich wie bei einem Internetbrowser, die Stammzertifikatsschlüssel in Gestalt der öffentlichen Schlüssel der zentralen Steuerplattform vor. Nur, wenn es sich bei dem übermittelten Identitätsinformationen um ordnungsgemäß zertifizierte Informationen handelt, kann dem Fahrzeug die Information über die Identität entschlüsselt und als richtig erkannt werden.

Mit diesen Identitätsinformationen wendet sich die Zugriffs-Steuereinheit des Fahrzeugs bei Pfeil 4 an die Steuerplattform und fragt nach den Zugriffsrechten an, die für diese Identität vorliegen. Die Zugriffs-Steuereinheit verfügt dazu über ein GSM-Modul zur Kommunikation mit der zentralen Plattform über ein Mobilfunknetz. Die Steuerplattform greift bei den Pfeilen 5 und 6 sowohl auf eine mit der Steuerplattform gekoppelte Identitätsverwaltung als auch eine Privilegien-Verwaltung zu. Diese brauchen nicht an derselben Stelle wie die zentrale Steuerplattform verortet zu sein. Beispielsweise kann bei einem Carsharing-Konzept eine zentrale Identitätsverwaltung vorhanden sein, die firmenübergreifend über mehrere Carsharing-Anbieter gepflegt ist. Die Privilegien, die diesen Identitäten zugeordnet sind, also die Frage, ob eine Person auf ein bestimmtes Fahrzeug in einem Carsharing-Pool zugreifen darf, können bei dem jeweiligen Firmen gespeichert sein. Gibt es also unterschiedliche Carsharing-Firmen, kann die zentrale Steuerplattform, je nach anfragender Fahrzeugeinheit auf eine zentrale Identitätsverwaltung zugreifen und auf einen speziellen Privilegien-Pool eines bestimmten Carsharing-Anbieters, der zu dem identifizierten Fahrzeug gehört. Bei der Kommunikation zwischen dem Fahrzeug und der zentralen Steuerplattform kann ebenfalls eine zertifikatsbasierte Kommunikation verwendet werden, um die Authentizität der Kommunikationspartner sicherzustellen.

In der zentralen Steuerplattform wird also ermittelt, welche Privilegien die identifizierte Person hinsichtlich des Fahrzeuges hat. Beispielsweise können die Privilegien so ausgestaltet sein, dass die Person volle Zugriffsrechte auf das Fahrzeug zur Öffnung der Türen und zum Start des Motors hat. Alternativ kann es sein, dass es sich bei der identifizierten Person um ein Werkstattmitglied eines Carsharing-Anbieters handelt, welches grundsätzlich das Recht hat, sämtliche Fahrzeuge zu öffnen, jedoch keine Fahrten mit Geschwindigkeiten über 20 km/h durchzuführen.

Diese Information wird von der zentralen Steuerplattform bei 7 zurück an die Zugriffs-Steuereinheit im Fahrzeug übermittelt, welche entsprechende Einstellungen oder Signale an das Steuersystem des Fahrzeuges ausgibt. Von dem Steuersystem wird dann entsprechend beispielsweise eine Türentriegelung vorgenommen und die Berechtigung zur Ausführung weiterer Fahrzeugfunktionen wird geschaltet.

Zusammenfassend ist also gewährleistet, dass eine Identitätsprüfung erfolgt, damit die mobile Zugriffseinrichtung überhaupt benutzt werden kann. Zweitens ist die mobile Zugriffseinrichtung mit einer von der zentralen Steuerplattform zertifizierten Identifikation ausgestattet, was eine Sicherheit gegenüber allen damit kontrollierten physischen Einheiten gewährleistet.

Das Zertifikat in dem Smartphone kann in einer weiteren Gestaltung dieses Ausführungsbeispiels mit einem kurzfristigen zeitlichen Ablauf versehen sein, so dass die mobile Zugriffseinrichtung sich regelmäßig ein erneuertes Zertifikat über eine Datenverbindung von der zentralen Steuerplattform abholen muss. Die derart beschriebene zertifikatbasierte Lösung, verknüpft mit der Identitätsprüfung am mobilen Gerät hat weitere Vorteile. Das grundsätzliche erfindungsgemäße Verfahren nutzt eine Datenverbindung zwischen Fahrzeug (Zugriffs-Steuereinheit) und zentraler Steuerplattform zur Verifikation der Rechte. Diese Verbindung ist jedoch nicht immer gewährleistet, beispielsweise bei Fahrten im Bereich mit schlechter Datennetzqualität oder bei Tiefgaragen. Das Verfahren erlaubt es in diesem Fall, anhand der Zertifikate dennoch eine Zugriffskontrolle auszuführen. Einerseits hat sich der Benutzer gegenüber dem mobilen Gerät zu identifizieren, was anhand der im mobilen Gerät gespeicherten Daten möglich ist. Erfolgt diese Verifikation erfolgreich, liegen im mobilen Gerät gültige Zertifikatsdaten von der zentralen Steuerplattform vor, deren Gültigkeit noch nicht abgelaufen ist. Allein mit dieser Information ist es möglich, dass auf Fahrzeugseite gewisse Privilegien zum Zugriff auf das Fahrzeug gewährt werden, auch wenn keine unmittelbare Kommunikation mit der zentralen Steuerplattform aufgenommen werden kann. Auf Fahrzeugseite, dort in der Zugriffs-Steuereinheit liegen aus früheren Verbindungen mit der zentralen Plattform die gespeicherten Zertifikatsinformationen der zentralen Steuerplattform vor und es kann verifiziert werden, dass bei erfolgreicher Identitätskontrolle ein gültiges Zertifikat der mobilen Zugriffseinrichtung vorhanden ist. Dieses Zertifikat kann beispielsweise bereits ausreichen, dass ein Benutzer auf das Fahrzeug zugreifen darf und z. B. bei einer Höchstgeschwindigkeit, z.B. von bis 50 km/h eine begrenzte Strecke, z.B. von maximal 2 km zurücklegen darf, innerhalb derer eine Kommunikation zwischen Zugriffs-Steuereinheit mit der zentralen Steuerplattform aufgebaut sein muss. Sobald die Verbindung aufgebaut ist, erfolgt die vollständige Prüfung und die vollständige Privilegien-Erteilung.

Dieses Konzept des vorläufigen Vertrauens aufgrund einer Zertifizierung ist deswegen möglich, da einerseits eine Identifikation des Benutzers gegenüber dem mobilen Gerät erfolgt ist und diese Identität auch dem Fahrzeug mitgeteilt wurde und andererseits eine zertifikatsbasierte vorläufige Vertrauenseinstellung gegenüber dem Fahrzeug nachgewiesen werden kann. Ein solches Verfahren wäre nicht möglich wenn es, wie bei herkömmlichen Verfahren, an der zweifelsfreien Feststellung der Identität mangeln würde. Da diese Identität jedoch Voraussetzung ist, um überhaupt im mobilen Gerät auf das dort verschlüsselt vorliegende Zertifikat zuzugreifen, kann das Fahrzeug eine vorläufige Vertrauensgewährung und Privilegien-Erteilung tolerieren. Auf diese Weise ist das erfindungsgemäße Verfahren herkömmlichen Verfahren überlegen, die eine jederzeit zwingende Verbindung zu einer zentralen Steuerplattform voraussetzen oder aber einem mobilen Zugriffsgerät, beispielsweise einem Schlüssel oder einem Smartphone mit einer entsprechenden Applikation vertrauen, ohne dass eine Identitätsverifikation des Benutzers erforderlich wäre.

In einem mobilen Gerät können für diese Zwecke zahlreiche verschiedene Zertifikate, beispielsweise für unterschiedliche Carsharing-Unternehmen gespeichert sein. Außerdem kann die Privilegien-Erteilung ebenfalls in verschiedenster Weise erfolgen. Es kann beispielsweise zu einer Identität eine priorisierte Privilegieneinstellung vorgenommen werden, die beispielsweise grundsätzlich nur das Fahren mit reduzierter Geschwindigkeit erlaubt, unabhängig von der eigentlichen Fahrzeugeinheit. Beispielsweise kann zu einer Identität bei einem Fahrer eines gewissen Alters festgelegt werden, dass dieser grundsätzlich nur mit einer Höchstgeschwindigkeit von z.B. 120 km/h fahren darf. Dieses höherrangige Privileg wird, unabhängig von der anfragenden Carsharing- oder Flotten-Einheit dem Fahrzeug mitgeteilt, so dass beispielsweise ein und dasselbe Fahrzeug, je nach zugreifender Identität in unterschiedlichen Fahrzeugmodi betrieben wird. Diese Gestaltung ist nur dadurch möglich, dass eine zentrale Steuerplattform vorliegt, welche Identitätsinformationen aufweist, die wiederum mit verschiedenen Privilegieneinstellungen, auch bei unterschiedlichen Stellen, verknüpft sein können. Ein und dieselbe Identität kann sich mittels verschiedener mobiler Geräte bei verschiedenen physischen Einheiten legitimieren. Dies ist nur möglich, weil die Identität der Person im mobilen Gerät verifiziert wird und nicht die mobile Zugriffseinrichtung (das Smartphone) an sich als legitimes Zugangsmittel erkannt wird. Entsprechend ist das Verfahren einem solchen Verfahren der Benutzung einfacher Zündschlüssel deutlich überlegen, da dort keine Prüfung der Identität in Kombination mit dem mobilen Gerät stattfindet und außerdem eine mobile Zugriffseinrichtung bei Verlust oder Diebstahl in einfacher Weise aus der Ferne für den Zugriff auf ein Fahrzeug gesperrt werden kann.

Alle im erfindungsgemäßen Verfahren ausgeführten Kommunikationen können mit herkömmlichen Absicherungen durchgeführt werden, z.B. über Aufbau von TLS-Verbindungen bei Internetbasierten Kommunikationen.

Nachdem unter Bezug auf Figur 1 ein prinzipieller und allgemeiner Ablauf des Verfahrens beschrieben wurde, wird nun unter Bezug auf die weiteren Figuren ein weiteres Ausführungsbeispiel beschrieben.

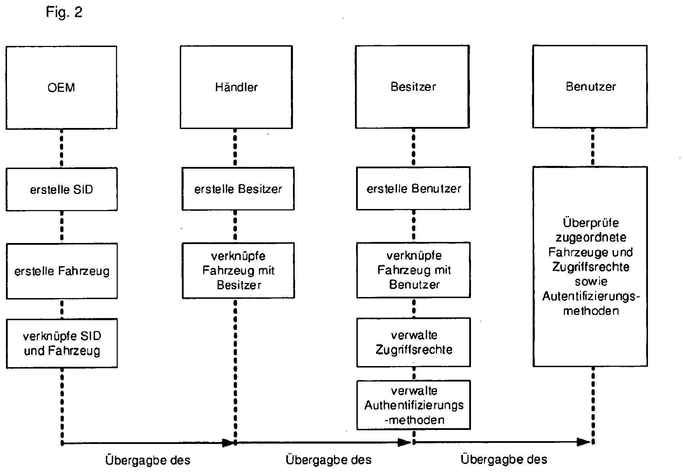

Figur 2 zeigt in schematischer Weise die Abfolge von Zugriffen auf die zentrale Plattform und die Erstellung und Manipulation von dort gespeicherten Daten und Verknüpfungen.

Die zentrale Plattform ist gemäß diesem Beispiel in einer herkömmlichen MVC (Model-View-Controller)-Architektur erstellt. Ein Benutzer kann auf die zentrale Plattform über eine Web-Schnittstelle zugreifen, indem er auf seinem lokalen Gerät einen entsprechenden Browser benutzt. Die Web-Schnittstelle der zentralen Plattform wird über einen herkömmlichen Webserver bereitgestellt. Von der Webserver-Ebene getrennt sind die Datenebene und externe Anwendungen. Auf der Datenebene sind die Daten beispielsweise in einem herkömmlichen Datenbankserver (SQL-Server) gespeichert.

Über die Lebensspanne eines Fahrzeuges, welches auch in diesem Fall als physische Einheit angenommen wird, ist in Figur 2 die Abfolge der Zugriffe über die Lebenszeit von links nach rechts dargestellt. Während der Fertigung hat zunächst der Hersteller die physische Kontrolle über das Fahrzeug. Der Hersteller hat zu diesem Zeitpunkt auch Zugriff auf die zentrale Plattform, um die Ersteinträge zu dem Fahrzeug einzurichten. Er erstellt Einträge für Fahrzeug und dessen Zugriffs-Steuereinrichtung (SID - Smart Identity Device) und verknüpft die Zugriffs-Steuereinrichtung mit dem Fahrzeug. Durch diese Verknüpfung auf Herstellerseite wird eine eindeutige und dauerhafte Verknüpfung zwischen Fahrzeugsystem und SID hergestellt. Das Fahrzeugsystem akzeptiert entsprechend die Steuerbefehle der verknüpften SID. Nach Fertigstellung des Fahrzeuges und dieser Verknüpfung wird das Fahrzeug zum Händler transportiert, wie in Figur 2 gezeigt.

Sobald das Fahrzeug an einen Benutzer ausgeliefert oder übergeben wird, erstellt der Händler über die Webschnittstelle in der zentralen Plattform diesen Benutzer als Identität und überträgt in der zentralen Plattform das Fahrzeug an den Benutzer. Der Händler stellt also die Verknüpfung her zwischen dem Fahrzeug und dessen zugeordneter SID und einer von ihm geschaffenen Benutzerkennung.

Anschließend wird das Fahrzeug an den neuen Besitzer physisch übergeben. Der vom Händler erstellte Besitzer verfügt über die Rechte, zu dem zu ihm verknüpften Fahrzeugen und SIDs weitere Benutzer als Fahrzeugbenutzer in der zentralen Plattform einzurichten. Diesen weiteren Benutzern, beispielsweise der Besitzer selbst oder dessen Familienmitgliedern (aber auch Mietkunden im Falle einer Mietwagenverwaltung), kann der Fahrzeugbesitzer über das Web-Interface der zentralen Plattform gezielt Rechte vergeben. Außerdem kann der Fahrzeugbesitzer entscheiden, welcher Benutzer zu welchen Rechten mit welcher Art von Authentifizierungsmaßnahmen zugreifen darf und ob die Rechte einer zeitlichen Begrenzung unterliegen, also zu einem bestimmten Zeitpunkt oder nach einer vorgegebenen Zeitdauer ungültig werden. Hierbei geht es darum, die Art und Weise zu bestimmen, wie ein Benutzer mit einem mobilen Zugangsgerät, in diesem Beispiel einem Smartphone, auf das Fahrzeug zugreifen darf. Der Fahrzeugbesitzer kann hierzu festlegen, dass für einige Zugriffsarten und Rechte lediglich die Eingabe einer PIN erforderlich ist, während bei anderen Rechten (beispielsweise Starten des Fahrzeuges) die Erkennung biometrischer Daten (z. B. Gesichtserkennung oder Fingerabdruckerkennung) erforderlich ist.

Von dem Fahrzeugbesitzer kann dann das Fahrzeug jeweils an Benutzer übergeben werden, was in Figur 2 als rechte Spalte dargestellt ist. Ein solcher Fahrzeugbenutzer kann beispielsweise über sein Smartphone nach erfolgreicher Identifizierung in der zentralen Plattform abfragen, welche Rechte er bezüglich eines bestimmten Fahrzeuges hat, kann diese Rechte jedoch nicht ändern.

Es ist erkennbar, dass auf den unterschiedlichen Ebenen unterschiedliche Rechte zum Zugriff und zur Veränderung der Daten in der zentralen Plattform vorgesehen sind. Während der Hersteller sowohl das Fahrzeug als auch die zugehörige SID anlegen und diese verknüpfen kann, kann ein Händler keinen Einfluss mehr auf die Daten des Fahrzeuges und der SID nehmen. Hingegen kann der Händler zu jedem Fahrzeug ein Besitzer anlegen und diesen mit den bereits vorhandenen Daten des Fahrzeuges und der SID verknüpfen. Der Besitzer wiederum kann die Rechte am Fahrzeug kontrollieren, erstellen und ändern und weitere Benutzer des Fahrzeuges anlegen. Der Benutzer schließlich kann lediglich seine eigenen Rechte in der zentralen Plattform überprüfen.

Jeder der Zuordnungsvorgänge kann durch verschiedene Sicherheitskonzepte geschützt sein. Bei diesem Ausführungsbeispiel wird bei der Zuordnung eines Fahrzeuges zu einem Fahrzeugbesitzer durch den Händler beispielsweise der folgende Vorgang eingeleitet:

Gibt der Händler auf der zentralen Plattform ein, dass ein Fahrzeug mit einer neu erstellten Identität verbunden werden soll, so wird zunächst die Verknüpfung in der Datenbank gespeichert, welche den Besitzer mit dem Fahrzeug und der dem Fahrzeug zugeordneten SID verknüpft. Anschließend wird eine zum Fahrzeugbesitzer hinterlegte Mobilfunknummer genutzt, um eine Nachricht (beispielsweise SMS) von der zentralen Plattform an diese Mobilfunknummer zu senden. Mittels dieser Nachricht wird der Fahrzeugbesitzer informiert, dass ihm in der zentralen Plattform ein neues Fahrzeug zugeordnet wurde. Außerdem wird eine Nachricht (beispielsweise wiederum eine SMS) an die verknüpfte SID des zugeordneten Fahrzeuges gesendet. In dieser Nachricht wird die SID aufgefordert (getriggert) eine Anfrage an die zentrale Plattform zu stellen, um ein Update zu Zugriffsrechten aus der zentralen Plattform abzurufen. Diese Art von Trigger-Nachrichten wird auch verwendet, wenn Rechtevergaben bezüglich der jeweiligen SID am Fahrzeug verändert wurden. Eine solche Triggerung ist sicherer als die unmittelbare Übersendung von Privilegien-Einstellungen, da eine Manipulation bei einer getriggerten Abfrage der zentralen Plattform unwahrscheinlicher ist, als wenn die SID übermittelte Daten unmittelbar akzeptieren würde.

In dem Ausführungsbeispiel ist die SID durch die empfangene Nachricht veranlasst, über einen GSM-Modul eine Datenverbindung mit der zentralen Plattform aufzubauen. Es werden anschließend aktualisierte Daten, einschließlich der Daten bezüglich des neu eingerichteten Benutzers auf die SID heruntergeladen. Die SID auf Fahrzeugseite verschlüsselt und speichert die Zugangsrechte zu dem Benutzer in der Einrichtung. Die Verbindung wird über die Prüfung von Zertifikaten gesichert, wobei in der SID von Herstellerseite bereits Stammzertifikate der zentralen Plattform hinterlegt sein können.

In analoger Weise kann die Rechtevergabe durch den Benutzer für sein Fahrzeug zu einem späteren Zeitpunkt abgewickelt werden. Sobald der Benutzer in der zentralen Plattform zu seinen Fahrzeugen Rechtevergaben ändert, sendet die zentrale Plattform an die betreffende SID im Fahrzeug eine Nachricht, welche eine Aktualisierung der Rechtevergabe in der SID des Fahrzeuges triggert.

Hierbei ist es auf Benutzerebene auch möglich, Zugriffsrechte mit Zeitvorgaben oder Gültigkeitsdauern zu verknüpfen, Rechte also zeitweise an andere Benutzer des Fahrzeuges zu vergeben. Die Vergabe der Rechte für den Fahrzeugbesitzer erfolgt grundsätzlich dauerhaft, der Besitzer kann jedoch die Rechte auch zeitlich beschränkt oder für Zeitintervalle an Benutzer übermitteln. Derartige zeitliche Beschränkungen werden dann von der zentralen Plattform der SID am Fahrzeug mitgeteilt und dort auch verschlüsselt gespeichert. Beispielsweise kann es vorgesehen sein, dass die SID nach Ablauf der Benutzungsrechte keinen erneuten Fahrzeugstart zulässt oder die Höchstgeschwindigkeit stark einschränkt.

Neben dieser grundsätzlichen Rechtevergabe innerhalb der zentralen Plattform und der Übermittlung von Rechten von der zentralen Plattform an die SID eines Fahrzeuges ist auch die Interaktion zwischen den Benutzer und seinem Mobilgerät, insbesondere einem Smartphone, relevant.

Auf dem Smartphone wird eine Applikation ausgeführt, welche eine Kommunikation sowohl mit der zentralen Plattform als auch mit der SID des Fahrzeuges abwickeln kann. Dazu wird beispielsweise eine Applikation durch den Händler auf das Gerät des Fahrzeugbesitzers überspielt oder es können Applikationen aus den einschlägigen Plattformen und Online-Shops für verschiedene Betriebssysteme heruntergeladen werden.

Bei der ersten Nutzung der Applikation auf einem Mobilgerät wird der Benutzer aufgefordert, einen Benutzernamen und ein Passwort einzugeben. Diese Daten werden benutzt, um einen Hashwert zu berechnen, welcher an die zentrale Plattform übermittelt wird. Die Kommunikation mit der zentralen Plattform kann dabei über einen üblichen Übertragungsmodus, z.B. über ein (verschlüsseltes) Http-Protokoll erfolgen. Die zentrale Plattform prüft, ob der Benutzer in ihrer Datenbank existent ist, und berechnet anhand der in der zentralen Plattform gespeicherten Daten hinsichtlich Benutzername und Passwort ebenfalls einen Hashwert. Dieser wird mit dem übermittelten Hashwert verglichen. Sofern dieser Abgleich von Benutzernamen und Hashwert eine positive Authentifizierung ergibt, werden der Applikation von der zentralen Plattform die dem Benutzer zugeordneten SIDs und Fahrzeuge übermittelt. Diese Daten werden von der Applikation auf dem Smartphone zu der Benutzerkennung verschlüsselt gespeichert.

Nachdem nun festgestellt wurde, dass der Benutzer grundsätzlich authentisch ist, wird er zur Sicherung der Zugriffsrechte aufgefordert, unterschiedliche Authentifizierungsmethoden am Smartphone anzulernen. Insbesondere wird er eingeladen, eine eindeutige PIN zu vergeben, eine Mustergeste auf dem Display des Smartphones auszuführen und eine Gesichtserkennung oder Fingerabdruckerkennung durchzuführen.

Diese unterschiedlichen Authentifizierungsmethoden stellen verschieden sichere Stufen für den Zugriff auf verschiedene Fahrzeugfunktionen dar. Welche der Authentifizierungen oder auch welche Verknüpfung von diesen Authentifizierungen für den Zugriff auf eine Fahrzeugfunktion ausreicht, wird in der zentralen Plattform vorgegeben.

Anschließend ist es dem Benutzer der Applikation auf dem Smartphone möglich, eines der Fahrzeuge erstmals für einen Zugriff zu aktivieren, welches von der zentralen Plattform an die Applikation als zugeordnetes Fahrzeug gemeldet wurde. Wählt der Benutzer ein Fahrzeug zur Aktivierung aus, sendet die Applikation eine Aktivierungsanfrage an die zentrale Plattform und die zentrale Plattform erstellt einen Zufallscode, der für eine begrenzte Zeitdauer gültig ist. Dieser zufällige Aktivierungscode wird über eine separate Nachricht an das Mobiltelefon des Benutzers gesendet. Er muss den Aktivierungscode aus der separaten Nachricht in der Applikation eingeben und die Applikation sendet diesen Aktivierungscode zurück an die zentrale Plattform. Auf diese Weise wird sichergestellt, dass der Benutzer tatsächlich die Nachricht auf dem Wege empfängt, der in der zentralen Plattform gespeichert ist.

Die zentrale Plattform validiert den Aktivierungscode und sendet an die Applikation auf dem Smartphone eine entsprechende Bestätigung. Die Applikation auf dem Smartphone erstellt dann ein Schlüsselpaar, bestehend aus einem privaten und einem öffentlichen Schlüssel und erstellt einen CSR (Certificate Signing Request), welcher an die zentrale Plattform gesendet wird. Die zentrale Plattform empfängt diesen CSR und erzeugt einen X509-Zertifikat für den Benutzer und die ihm zugeordnete SID und Fahrzeugkombination. Dies bedeutet, dass für jeden Benutzer und jede Fahrzeug/SID-Kombination ein Zertifikat erstellt wird, welches sowohl die Benutzer-ID als auch die Kennung der SID in dem Zertifikat enthält. Diese Zertifikatsdaten werden zurück an die Applikation auf dem Smartphone gesendet, zusammen mit der Bluetooth-Adresse der SID des betroffenen Fahrzeuges.

Die Daten werden durch die Applikation empfangen und verschlüsselt gespeichert. Die Applikation verfügt dann über die Bluetooth-Adresse der zugeordneten SID, was ein Pairing der Applikation auf dem Smartphone und der zugeordneten SID über Bluetooth erlaubt.

Das Vorstehende zu diesem Ausführungsbeispiel beschreibt sämtliche Vorbereitungshandlungen, die nur einmalig oder bei Änderung der Zugriffsrechte durchzuführen sind. Ebenso sind diese Vorgänge teilweise auszuführen, wenn ein Fahrzeugbesitzer oder -benutzer ein neues Mobilgerät nutzen möchte, um auf ein vorhandenes Fahrzeug zuzugreifen.

In der Praxis ist der alltägliche Zugriff mit dem einmal eingerichteten System auf ein Fahrzeug der weitaus häufigste Fall. Dazu wird eine kurzreichweitige, drahtlose Verbindung zwischen der Applikation auf dem Mobilgerät und dem SID in einem Fahrzeug hergestellt. Dieser Pairing-Vorgang passiert in der bekannten Weise, gegebenenfalls ist anfänglich eine Bestätigung der Kopplung beider Geräte erforderlich, was abhängig von der Art des benutzten Betriebssystems und den Einstellungen auf einem Smartphone ist. Das Smartphone erhielt jedoch bereits bei der Aktivierung eines Fahrzeuges und dessen zugeordneter SID die Adressdaten der SID für die Bluetooth-Verbindung, so dass eine derartige Bestätigung auch unterbleiben kann.

Ist ein derartiges Pairing erfolgreich vorgenommen, kann der Benutzer bei geöffneter Applikation auf Fahrzeugfunktionen zugreifen, beispielsweise über eine grafische Schnittstelle, die auf den berührungsempfindlichen Bildschirm eines Smartphones angezeigt wird.

Die Fahrzeugfunktionen können beispielsweise Türschlösser betreffen, den Motorstart, den Start einer Heizung oder Standheizung, die Öffnung von Fenstern, die Öffnung der Heckklappe oder die Schaltung von Beleuchtungseinrichtungen am Fahrzeug.

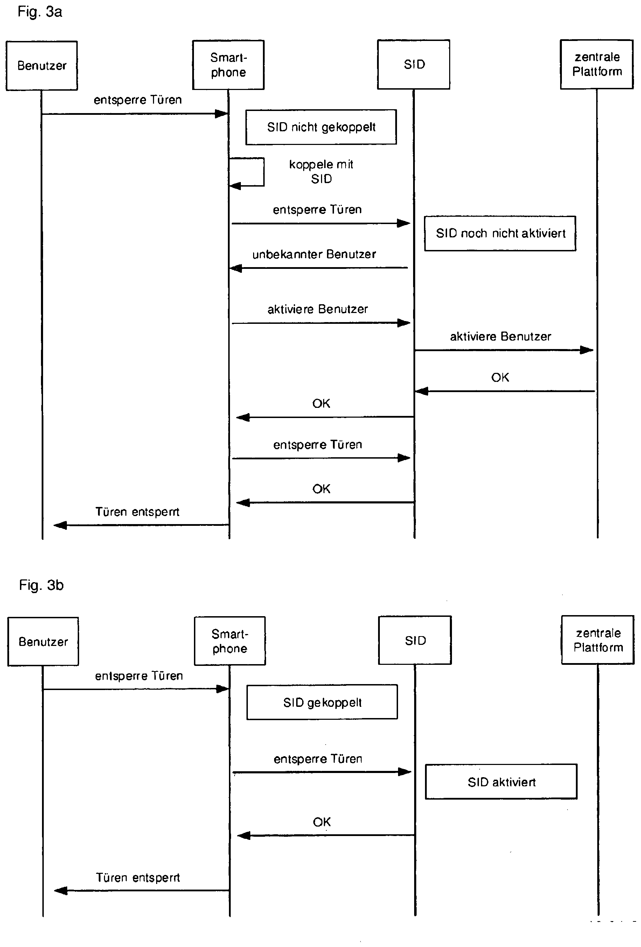

Figur 3a zeigt beispielhaft einen Zugriffsablauf, wenn ein Benutzer mit seinem Smartphone Zugriff auf eine Fahrzeugfunktion nehmen möchte. Dieses Diagramm ist von oben nach unten zu lesen.

Der Benutzer öffnet auf seinem Smartphone die Applikation zum Zugriff auf sein Fahrzeug und wählt das Kommando zum Entriegeln der Türen aus. Die Applikation auf dem Smartphone prüft anhand der gespeicherten Daten, welche Authentifizierung durch den Benutzer für diese Funktion erforderlich ist und fordert diese beim Benutzer an, sofern die Authentifizierung in dieser Stufe noch nicht beim Start der Applikation vorgenommen wurde.

Die Applikation stellt daraufhin fest, dass sie nicht mit der SID des angesteuerten Fahrzeuges gekoppelt ist und stellt zunächst eine Bluetooth-Verbindung mit der SID des Fahrzeuges her. Über die Bluetooth Verbindung wird eine sichere Datenverbindung etabliert, also über eine Protokollebene oberhalb von Bluetooth. Dann leitet die Applikation das Kommando zum Öffnen der Türen an die SID weiter. In diesem Beispiel ist der Benutzer auf Seiten der SID jedoch noch nicht bekannt (die SID ist für diesen Benutzer noch nicht aktiviert). Die SID antwortet entsprechend an das Mobiltelefon, dass der Benutzer nicht bekannt sei. Die Applikation fordert die SID daraufhin zur Aktivierung des Benutzers auf, woraufhin die SID bei der zentralen Plattform über das GSM-Modul eine Aktivierungsanfrage stellt. Die zentrale Plattform bestätigt der SID, dass der Benutzer für das Fahrzeug legitimiert ist und die SID aktiviert hat und sendet entsprechende Zugangsinformationen.

Daraufhin bestätigt die SID dem Mobiltelefon die Aktivierung des Benutzers. Die Applikation auf dem Smartphone wiederholt daraufhin die Anforderung zur Öffnung der Türen, was durch die SID bestätigt wird und schließlich werden die Türen für den Benutzer entriegelt. Das beschriebene Szenario ist das Worst-Case-Szenario, bei dem der Ablauf sämtliche gezeigten Schritte umfassen kann. Üblicherweise ist jedoch bei Annäherung des Benutzers an das Fahrzeug bereits eine Bluetooth-Verbindung hergestellt und der Benutzer ist auch bereits in der SID bekannt. Dann läuft das Verfahren mit deutlich weniger Schritten und äußerst rasch ab. Dieser Ablauf in der üblichen Art und Weise ist in Figur 3b gezeigt.

Die erfindungsgemäße Verfahrensweise ermöglicht eine äußerst sichere Verwaltung und flexibles Management von Benutzerrechten, beispielsweise in Fuhrparks, aber auch bei Benutzung anderer physischer Einheiten, z. B. Maschinen oder ähnlichem. Durch die getrennten Kommunikationskanäle zwischen der SID an jeder physischen Einheit zu der zentralen Plattform einerseits und der zentralen Plattform und einer mobilen Einrichtung (Smartphone) andererseits wird die Sicherheit erhöht. Dadurch, dass außerdem ein Benutzer noch zur Authentifizierung an einem mobilen Zugriffsgerät aufgefordert wird, um überhaupt auf die im mobilen Geräte verschlüsselt abgelegten Daten zugreifen zu können, wird eine weitere Sicherheitsstufe hinzugefügt.

Der verschlüsselte Speicher in dem mobilen Zugriffsgerät (insbesondere Smartphone) enthält beispielsweise die Informationen zu aktivierten Fahrzeugen, die Informationen zu den mit den Fahrzeugen gekoppelten SIDs, insbesondere deren Bluetooth-Adressen und Verbindungscodes, den Clientzertifikaten und Schlüsseln für die Kommunikation und die Liste der Authentifizierungsmethoden bei Anforderungen von Kommandos sowie die Benutzerinformationen, insbesondere Benutzernamen und Passwörtern.

In dem Speicher der SIDs zu jedem Fahrzeug werden beispielsweise in verschlüsselter Weise der private Schlüssel der SID, ein Zertifikat der SID und ein Zertifikat und/oder öffentlicher Schlüssel der zentralen Plattform gespeichert.

Die Speicherung dieser Daten in den Einrichtungen ermöglicht eine flexible Art der Zugriffskontrolle. Insbesondere können in der SID eines Fahrzeuges gespeicherte Zertifikatsinformation dazu benutzt werden, eine temporäre Vertrauensbeziehung zwischen dem Fahrzeug und einem zugreifenden Benutzer mit einem Smartphone herzustellen. Die Applikation des Benutzers erhält, wie oben beschrieben, Zugriffsinformationen für eine SID von der zentralen Plattform. Dabei wird die Information mit einem privaten Schlüssel der zentralen Plattform verschlüsselt. Die SID auf Fahrzeugseite enthält Informationen über die Stammzertifikate der zentralen Plattform. Selbst in dem Fall, wo die SID keinen Zugriff auf die zentrale Plattform hat, kann durch diese Konstruktion jedenfalls ein zeitweiser Zugriff eines Benutzers auf ein Fahrzeug gewährt werden. Kann nämlich die SID anhand der gespeicherten Informationen zu Stammzertifikaten positiv verifizieren, dass die vom Smartphone über die App an die SID geschickten Informationen tatsächlich von der zentralen Plattform signiert wurden, so kann eine zeitweise Vertrauensbeziehung hergestellt werden. Dies ist insbesondere relevant, wenn sich beispielsweise ein neuer Nutzer bei einem Mietwagen Zugang verschaffen will, der Mietwagen aber beispielsweise in einem Bereich mit schlechter Mobilfunkanbindung steht. Ist der Zertifikatsabgleich in der SID des Fahrzeuges erfolgreich, so kann dem Benutzer Zugriff auf das Fahrzeug gewährt werden und das Fahrzeug wird die vollständigen Benutzerrechte abfragen, sobald eine Netzverbindung besteht.

## Patentansprüche

1. Verfahren zur Steuerung des Zugriffs auf physische Einrichtungen,
wobei jede physische Einrichtung mit einer Zugriffs-Steuereinheit ausgestattet ist, welche den Zugriff auf Funktionen der physischen Einheit sperren und freigeben kann,
wobei eine zentrale Steuerplattform ausgebildet ist, wobei zwischen der zentralen Steuerplattform und den Zugriffs-Steuereinheiten drahtlose Kommunikationsverbindungen etablierbar sind,
wobei mobile Zugangseinrichtungen vorhanden sind, die von einem Benutzer mitführbar sind und mit den Zugriffs-Steuereinheiten und der zentralen Steuerplattform drahtlose Kommunikationsverbindungen aufbauen können,
dass bei einem Zugriff eines Benutzers unter Verwendung der mobilen Zugangseinrichtung auf eine physische Einrichtung eine Identitätsprüfung des Benutzers durchgeführt wird, wobei der Benutzer sich gegenüber der mobilen Zugangseinrichtung identifiziert,
wobei nach erfolgreicher Identitätsprüfung eine drahtlose Kommunikationsverbindung zwischen mobiler Zugangseinrichtung und der Zugriffs-Steuereinheit der physischen Einrichtung aufgebaut wird,
wobei von der mobilen Zugangseinrichtung wenigstens die Identität des Benutzers und eindeutige Zugangsdaten an die Zugriffs-Steuereinheit übermittelt werden,
**dadurch gekennzeichnet,**
**dass** die mobile Zugangseinrichtung in einem mobilen Kommunikationsgerät implementiert ist, auf welchem eine Applikation ausgeführt wird, welche die Prüfung der Identität und die Kommunikation zwischen mobilem Kommunikationsgerät und der Zugriffs-Steuereinheit ausführt,
wobei die Zugriffs-Steuereinheit anhand der empfangenen Informationen und anhand von weiteren Informationen, die die Zugriffs-Steuereinheit von der zentralen Steuerplattform empfängt, Zugriffsrechte auf die physische Einrichtung ermittelt und dem Benutzer gewährt,
wobei die Zugriffs-Steuereinheit nach Erhalt der Informationen von der mobilen Zugangseinrichtung die Informationen zur Identität des Benutzers und eine eindeutige Kennung der Zugriffs-Steuereinheit selbst über eine drahtlose Kommunikationsverbindung an die zentrale Steuerplattform sendet, die zentrale Steuerplattform daraufhin die Zugriffsrechte des identifizierten Benutzers auf die zu der Zugriffs-Steuereinheit zugeordnete physische Einheit ermittelt und die zentrale Steuerplattform die Zugriffsberechtigungen über die drahtlose Kommunikationsverbindung an die Zugriffs-Steuereinheit übermittelt und die Zugriffs-Steuereinheit anhand dieser Informationen die Zugriffsrechte gewährt
wobei die Zugriffs-Steuereinheit außerdem unabhängig von Benutzerzugriffen in zeitlichen Abständen Informationen von der zentralen Steuerplattform erhält und speichert,
wobei die Zugriffs-Steuereinheit anhand dieser gespeicherten Informationen und den beim Zugriffsversuch von der mobilen Zugangseinrichtung erhaltenen Informationen die Zugriffsrechte ermittelt und gewährt.

2. Verfahren nach Anspruch 1, wobei die Identifikation des Benutzers gegenüber dem mobilen Zugangseinrichtung anhand von biometrischen Daten erfolgt, insbesondere unter Durchführung einer Gesichtserkennung und/oder unter Durchführung einer Stimmerkennung und/oder einer Fingerabdruckerkennung.

3. Verfahren nach einem der vorangehenden Ansprüche, wobei zwischen mobiler Zugangseinrichtung und zentraler Steuerplattform eine Kommunikationsverbindung aufgebaut wird, wobei von der zentralen Steuerplattform an die mobile Zugangseinrichtung Zertifikatsinformationen übermittelt werden, wobei die Zertifikationsinformationen jeweils Benutzeridentitäten zugeordnet sind.

4. Verfahren nach Anspruch 3, wobei zwischen einer Zugriffs-Steuereinheit und der zentralen Steuerplattform eine Kommunikationsverbindung aufgebaut wird, wobei von der zentralen Steuerplattform an die Zugriffs-Steuereinheit Zertifikatsinformationen zur Speicherung übermittelt werden, welche die Prüfung der Authentizität und Integrität von Informationen erlauben, die von einer mobilen Zugangseinrichtung an die Zugriffs-Steuereinheit übermittelt werden.

5. Verfahren nach Anspruch 4, wobei die zentrale Steuerplattform an die mobile Zugangseinrichtung eine Bestätigung der Identität übermittelt, wobei wenigstens ein Teil der Bestätigung mit einem privaten Schlüssel der zentralen Steuerplattform verschlüsselt ist,
wobei die Zugriffs-Steuereinheit einen öffentlichen Schlüssel von der zentralen Steuerplattform erhält, mit dessen Hilfe die von den mobilen Zugangseinrichtungen erhaltenen Identitätsinformationen verifiziert werden können.

6. Verfahren nach einem der Ansprüche 3 bis 5, wobei die an die mobile Zugangseinrichtung von der zentralen Steuerplattform übermittelten Zertifikatsinformationen mit einer zeitlichen Ablaufinformation versehen sind, welche die Gültigkeitsdauer der Zertifizierung angeben.

7. Verfahren nach einem der vorangehenden Ansprüche, wobei die Zugriffs-Steuereinheit dann, wenn keine Datenkommunikation mit der zentralen Steuerplattform aufgebaut werden kann, die Gültigkeit eines Zertifikats aus der Übertragung von der mobilen Zugangseinrichtung mit gespeicherten Informationen verifiziert und im Falle eines gültigen Zertifikats eine vorgegebene Auswahl an Zugriffsrechten an den identifizierten Benutzer gewährt.

8. Verfahren nach Anspruch 7, wobei die Auswahl an Zugriffsrechten eine limitierte Benutzung der physischen Einheit erlauben, insbesondere eine zeitliche oder funktionsmäßige Limitierung einschließen.

9. Verfahren nach einem der vorangehenden Ansprüche, wobei als physische Einrichtungen Fahrzeuge verwendet werden.

10. Verfahren nach einem der vorangehenden Ansprüche, wobei für jede Kombination von Benutzer und physischer Einheit ein eindeutiges Zertifikat erstellt wird, welches in der mobilen Zugangseinrichtung gespeichert wird.

11. Verfahren nach einem der vorangehenden Ansprüche, wobei die zentrale Steuerplattförm für jede physische Einheit eine eindeutige Adresse der zugeordneten Zugriffs-Steuereinheit für den Aufbau einer kurzreichweitigen drahtlosen Verbindung, insbesondere Bluetooth Verbindung speichert, und diese Adresse an die mobile Zugangseinrichtung übermittelt.

## Claims

1. Method for controlling access to physical devices,
wherein each physical device is equipped with an access control unit which can disable and enable access to functions of the physical device,
wherein a central control platform is implemented,
wherein wireless communication links can be established between the central control platform and the access control units,
wherein mobile access devices are present, which can be carried by a user and which can set up wireless communication links to the access control units and the central control platform,
that in the event of an access by a user to a physical device using the mobile access device, an identity check of the user is carried out, wherein the user identifies himself or herself to the mobile access device,
wherein after a successful identity check a wireless communication link is set up between the mobile access device and the access control unit of the physical device,
wherein at least the identity of the user and unique access data are transmitted to the access control unit by the mobile access device,
**characterized in that**
the mobile access device is implemented in a mobile communication device, on which an application is run which performs the verification of the identity and the communication between the mobile communication device and the access control unit,
wherein on the basis of the information received and on the basis of other information which the access control unit receives from the central control platform, the access control unit determines access rights to the physical device and grants them to the user,
wherein on receipt of the information from the mobile access device, the access control unit sends the information on the identity of the user and a unique identifier of the access control unit itself via a wireless communication link to the central control platform, whereupon the central control platform determines the access rights of the identified user to the physical unit associated with the access control unit and the central control platform transmits the access permissions over the wireless communication link to the access control unit and the access control unit grants the access rights on the basis of this information,
wherein the access control unit also receives and stores information from the central control station at intervals of time independently of user accesses,
wherein based on this stored information and on the information received by the mobile access device during the access attempt, the access control unit determines and grants the access rights.

2. Method according to claim 1, wherein the identification of the user with respect to the mobile access device takes place on the basis of biometric data, in particular by carrying out face recognition and/or by carrying out voice recognition and/or a fingerprint recognition.

3. Method according to any one of the previous claims,
wherein a communication link is established between the mobile access device and the central control platform, wherein the central control platform transmits certification information to the mobile access device, wherein the certification information items are each assigned to user identities.

4. Method according to Claim 3, wherein a communication link is established between an access control unit and the central control platform, wherein the central control platform transmits to the access control unit certification information for storage which allows the verification of the authenticity and integrity of information that is transmitted by a mobile access device to the access control unit.

5. Method according to Claim 4, wherein the central control platform transmits a confirmation of the identity to the mobile access device, wherein at least a part of the confirmation is encrypted with a private key of the central control platform,
wherein the access control unit obtains a public key from the central control platform, by means of which the identity information received by the mobile access devices can be verified.

6. Method according to any one of Claims 3 to 5, wherein the certification information transmitted to the mobile access device by the central control platform is provided with chronological sequence information which specify the period of validity of the certificate.

7. Method according to any one of the previous claims,
wherein the access control unit, when no data communication can be established with the central control platform, verifies the validity of a certificate from the transmission by the mobile access device with stored information, and in the case of a valid certificate grants a predefined selection of access rights to the identified user.

8. Method according to Claim 7, wherein the selection of access rights allows a limited use of the physical unit and, in particular, includes a temporal or functional limitation.

9. Method according to one of the previous claims,
wherein vehicles are used as physical devices.

10. Method according to any one of the previous claims,
wherein for each combination of user and physical unit a unique certificate is created, which is stored in the mobile access device.

11. Method according to any one of the previous claims,
wherein for each physical unit the central control platform stores a unique address of the associated access control unit for establishing a short-range wireless connection, in particular a Bluetooth connection, and transmits this address to the mobile access device.

## Revendications

1. Procédé de commande d'accès à des dispositifs physiques,
dans lequel chaque dispositif physique est équipé d'une unité de commande d'accès, qui peut bloquer et débloquer l'accès aux fonctions de l'unité physique,
dans lequel une plate-forme de commande centrale est réalisée,
dans lequel entre la plate-forme de commande centrale et les unités de commande d'accès des liaisons de communication sans fil peuvent être établies,
dans lequel des dispositifs d'accès mobile sont présents, qui peuvent être emportés par un utilisateur et peuvent établir des liaison de communication sans fil avec les unités de commande d'accès et la plate-forme de commande centrale,
dans lequel lors d'un accès d'un utilisateur en utilisant le dispositif d'accès mobile, un contrôle d'identité de l'utilisateur est effectué sur un dispositif physique, dans lequel l'utilisateur s'identifie par rapport au dispositif d'accès mobile,
dans lequel après un contrôle d'identité réussi une liaison de communication sans fil entre le dispositif d'accès mobile et l'unité de commande d'accès du dispositif physique est établie,
dans lequel à partir du dispositif d'accès mobile au moins une identité de l'utilisateur et des données d'accès univoques sont transmises à l'unité de commande d'accès,
**caractérisé en ce que**
le dispositif d'accès mobile est implémenté dans un appareil de communication mobile, sur lequel l'application est exécutée, qui effectue le contrôle de l'identité et la communication entre l'appareil de communication mobile et l'unité de commande d'accès,
l'unité de commande d'accès sur la base de l'information reçue et sur la base d'autres informations, que reçoit l'unité de commande centrale à partir de la plate-forme de commande centrale, détermine des droits d'accès sur le dispositif physique et autorise d'utilisateur,
dans lequel l'unité de commande d'accès après l'obtention d'information provenant du dispositif d'accès mobile envoie les informations relatives à l'identité d'utilisateur et une identification univoque de l'unité de commande d'accès même par l'intermédiaire de liaison de communication sans fil à la plate-forme de commande centrale la plate-forme de commande centrale détermine ensuite les droits d'accès de l'utilisateur identifié sur l'unité physique affectée à l'unité de commande d'accès et la plate-forme de commande centrale transmet les autorisations d'accès par l'intermédiaire de la liaison de communication sans fil à l'unité de commande d'accès et l'unité de commande d'accès autorise sur la base de ces informations des droits d'accès,
dans lequel l'unité de commande d'accès obtient et mémorise en outre des informations indépendamment des accès d'utilisateur à intervalles temporels par la plate-forme de commande,
dans lequel l'unité de commande d'accès détermine et sélectionne les droits d'accès sur la base de ces informations mémorisées et les informations obtenues lors de la tentative d'accès par le dispositif d'accès mobile.

2. Procédé selon la revendication 1, dans lequel l'identification de l'utilisateur par rapport au dispositif d'accès mobile a lieu sur la base de données biométriques notamment en effectuant une reconnaissance faciale et/ou en effectuant une reconnaissance vocale et/ou une reconnaissance d'empreinte digitale.

3. Procédé selon une des revendications précédentes, dans lequel entre le dispositif d'accès mobile et la plate-forme de commande centrale une liaison de communication établie, dans lequel des informations de certificats sont transmises de la plate-forme de commande centrale au dispositif d'accès mobile, dans lequel les informations de certificats sont affectées respectivement à des identités d'utilisateur.

4. Procédé selon la revendication 3, dans lequel entre une unité de commande d'accès et la plate-forme de commande centrale une liaison de communication est établie, dans lequel de la plate-forme de commande centrale à l'unité de commande d'accès des informations de certificats à mémoriser sont transmises, qui permettent le contrôle de l'authenticité et l'intégrité des informations, qui sont transmises d'un dispositif d'accès mobile à l'unité de commande d'accès.

5. Procédé selon la revendication 4, dans lequel la plate-forme de commande centrale transmet au dispositif d'accès mobile une confirmation de l'identité, dans lequel au moins une partie de la confirmation est cryptée avec une clé privée de la plate-forme de commande centrale,
dans lequel l'unité de commande d'accès obtient une clé publique de la plate-forme de commande centrale, à l'aide de laquelle les informations d'identités obtenues par le dispositif d'accès mobile peuvent être vérifiées.

6. Procédé selon une des revendications 3 à 5, dans lequel les informations de certificat transmises au dispositif d'accès mobile par la plate-forme de commande centrale sont pourvues d'une information de déroulement temporel, qui indique la durée de validité de la certification.

7. Procédé selon une des revendications précédentes, dans lequel l'unité de commande d'accès vérifie ensuite, quand aucune communication de données ne peut être établie avec la plate-forme de commande centrale, la validité d'un certificat d'après la transmission par le dispositif d'accès mobile avec les informations mémorisées un nombre prédéterminé de droits d'accès est accordé à un utilisateur identifié.

8. Procédé selon la revendication 7, dans lequel le nombre de droits d'accès permet une utilisation limitée de l'unité physique, notamment définit une limitation temporelle ou fonctionnelle.

9. Procédé selon une des revendications précédentes, dans lequel des véhicules sont utilisés comme dispositifs physiques.

10. Procédé selon une des revendications précédentes, dans lequel pour chaque combinaison d'utilisateur et d'unité physique un certificat univoque est créé, qui est mémorisé dans le dispositif d'accès mobile.

11. Procédé selon une des revendications précédentes, dans lequel la plate-forme de commande centrale pour chaque unité physique mémorise une adresse univoque de l'unité de commande d'accès affectée pour l'établissement d'une liaison sans fil à courte portée, notamment une liaison Bluetooth, et transmet cette adresse au dispositif d'accès mobile.
